# EUROPÄISCHE PATENTSCHRIFT

(11) **EP 3 551 422 B1**
(45) Veröffentlichungstag und Bekanntmachung des Hinweises auf die Patenterteilung: **11.11.2020**
(21) Anmeldenummer: 16822379.0
(22) Anmeldetag: 08.12.2016
(51) Int. Cl.: B29C 49/48, B29L 31/50, B29C 49/04, B29C 49/06, B29K 75/00, B29K 23/00, B29K 33/00, B29K 77/00, B29K 59/00, B29K 69/00, B29K 27/06

(54) **VERFAHREN ZUR HERSTELLUNG EINER SCHUHSOHLE**
METHOD FOR PRODUCING A SHOE SOLE
PROCÉDÉ DE PRODUCTION D'UNE SEMELLE DE CHAUSSURE

(43) Veröffentlichungstag der Anmeldung: 16.10.2019
(73) Patentinhaber: PUMA SE, 91074 Herzogenaurach (DE)
(72) Erfinder: HARTMANN, Matthias, 91301 Forchheim (DE); GIRARD, Romain, 91207 Lauf an der Pegnitz (DE)
(74) Vertreter: Gosdin, Michael
(86) Internationale Anmeldenummer: PCT/EP2016/002066
(87) Internationale Veröffentlichungsnummer: WO 2018/103811

(56) Entgegenhaltungen:
- EP-A1- 0 215 974
- US-A- 3 608 215
- US-A1- 2002 113 342

## Beschreibung

Die Erfindung betrifft ein Verfahren zur Herstellung einer Schuhsohle, insbesondere einer solchen für einen Sportschuh.

Die Herstellung von Schuhsohlen insbesondere für Sportschuhe ist eine hinlänglich bekannte Technologie. Dabei wird angestrebt, nicht nur einen wirtschaftlichen Prozess für die Fertigung bereitzustellen, sondern auch die Möglichkeit zu haben, auf das Feder- und Dämpfverhalten der Schuhsohle und damit des Schuhs möglichst gut Einfluss nehmen zu können. Hierfür spielt auch das zum Einsatz kommende Material eine wesentliche Rolle.

In der US 2009/0013558 A1 wird ein Schuh beschrieben, bei dem die Schuhsohle aus unterschiedlichen Kunststoffen besteht, die miteinander verbunden sind, wobei unterschiedliche Polymermaterialien zum Einsatz kommen. In der WO 2007/082838 A1 wird beschrieben, dass für eine Schuhsohle auch expandiertes Thermoplastisches Polyurethan (E-TPU) vorteilhaft zum Einsatz kommen kann. In diesem Dokument sind auch detaillierte Informationen zu diesem Kunststoffmaterial vorhanden; insoweit wird ausdrücklich auf dieses Dokument Bezug genommen.

Auch in der DE 10 2011 108 744 B4 wird ein Schuh beschrieben, bei dem E-TPU als Material für die Sohle eingesetzt wird. Hier wird weiter beschrieben, dass einzelne geschäumte Kunststoffkugeln aus diesem Material, die zumeist eine Abmessung von wenigen Millimetern haben, dadurch zur Sohle geformt werden, dass gemäß einer möglichen Verarbeitungsform in ein entsprechendes Werkzeug ein Bindemittel eingegeben wird, so dass die Kunststoffkugeln miteinander verbunden werden und den Formkörper der Sohle bilden. Nach einer anderen Vorgehensweise wird Wasserdampf unter definiertem Druck in ein Formwerkzeug eingegeben, in dem die Kunststoffkugeln eingebracht sind. Dabei kommt es zu einem partiellen Aufschmelzen des Kunststoffmaterials, so dass sich die Kunststoffkugeln stoffschlüssig miteinander verbinden und so den Formkörper der Sohle bilden.

Die damit erzielbaren Eigenschaften des Schuhs, insbesondere mit Blick auf dessen Feder- und Dämpfungsverhalten, sind nicht in jedem Falle voll befriedigend. Des weiteren ist der Herstellungsprozess der genannten Sohle mitunter relativ aufwendig und somit kostenintensiv.

Aus der EP 0 215 974 A1 ist es bekannt, einen hohlen Sohlenkörper für einen Schuh durch Blasformen zu fertigen. Eine ähnliche Lösung zeigt die US 2002/113342 A1**.** Der in der US 3 608 215 A beschriebene Schuh weist gleichermaßen eine Sohle mit einem Hohlraum auf.

Der Erfindung liegt daher die **Aufgabe** zugrunde, ein Verfahren bereitzustellen, mit dem eine Schuhsohle kostengünstig hergestellt und deren Feder- und Dämpfungsverhalten in einer gewünschten Weise eingestellt werden kann. Die Schuhsohle soll somit in wirtschaftlicher Weise und mit einfach einstellbaren Feder- und Dämpfungseigenschaften produziert werden können.

Die **Lösung** dieser Aufgabe durch die Erfindung ist dadurch gekennzeichnet, dass das Verfahren die folgenden Schritte umfasst:
a) Extrudieren eines Kunststoffschlauchs und Zuführen des Kunststoffschlauchs in eine Blasform oder Spritzgießen eines Kunststoffrohlings und Zuführen des Kunststoffrohlings in eine Blasform (3);
b) Blasformen des Kunststoffschlauchs oder des Kunststoffrohlings zu einem Sohlen-Hohlkörper, wobei während des Blasformprozesses an sich gegenüberliegenden Wandungen des Sohlen-Hohlkörpers Einformungen eingebracht werden, so dass Teile der Wandungen in Kontakt miteinander gebracht werden und zwischen den sich gegenüberliegenden Wandungen eine Stützstruktur bilden;
c) Entformen des blasgeformten Sohlen-Hohlkörpers aus der Blasform;
d) Zumindest teilweises, vorzugsweise vollständiges, Füllen des blasgeformten Sohlen-Hohlkörpers mit Kunststoffkörpem, wobei die Kunststoffkörper durch eine erste Öffnung im Sohlen-Hohlkörper eingefüllt werden.

Als Kunststoffkörper werden dabei insbesondere Kugeln, Ellipsoide oder Zylinder verwendet. Die Abmessungen der einzelnen Kunststoffkörper in den drei Raumrichtungen liegen bevorzugt zwischen 1 mm und 13 mm, besonders bevorzugt zwischen 3 mm und 6 mm. Die Kunststoffkörper bestehen dabei insbesondere aus geschäumtem Kunststoffmaterial.

Als Material für die Kunststoffkörper kommt bevorzugt expandiertes thermoplastisches Polyurethan (E-TPU), expandiertes thermoplastisches Elastomer (E-TPE) (insbesondere expandiertes thermoplastischen Elastomer auf Olefinbasis (E-TPO)) und/oder expandiertes Polypropylen (EPP) zum Einsatz.

Der Sohlen-Hohlkörper besteht indes bevorzugt aus thermoplastischem Polyurethan (TPU), aus thermoplastischem Elastomer (TPE), aus Polyamid (PA) und/oder aus Gummimaterial.

Eine bevorzugte Weiterbildung des Verfahrens sieht vor, dass nach obigem Schritt d) ein Verschließen, insbesondere ein Verschweißen, der ersten Öffnung erfolgt.

Weiterhin kann vorgesehen werden, dass während oder nach obigem Schritt d) ein Absaugen von Luft aus dem Sohlen-Hohlkörper erfolgt. Dies erfolgt bevorzugt über eine zweite Öffnung, die von der ersten Öffnung beabstandet ist.

Die Kunststoffkörper werden dabei bevorzugt ohne Verbindung zueinander im Sohlen-Hohlkörper platziert. Demgemäß werden die einzelnen Kugeln oder Elipsoide nicht durch irgendwelche Maßnahmen miteinander verbunden, sondern sie sind lose im Sohlen-Hohlkörper platziert.

Die Kunststoffkörper werden dabei bevorzugt in voller Packung und vorzugsweise unter Druck im Sohlen-Hohlkörper platziert.

Die Herstellung der Stützstruktur erfolgt bevorzugt, indem in die eine Wandung mittels eines ersten Deformationswerkzeugs die eine Einformung mit geschlossenem Endbereich erzeugt wird und in die andere Wandung mittels eines zweiten Deformationswerkzeugs die andere Einformung mit offenem Endbereich erzeugt wird, wobei der geschlossene Endbereich der einen Einformung zum Eintritt in das offene Ende der zweiten anderen Einformung ausgebildet ist. Hierdurch wird in sehr vorteilhafter Weise ein Feder- bzw. Dämpfungselement nach Art eines Kolben-Zylinder-Systems realisiert. Bei bestimmungsgemäßer Benutzung des Schuhs, der mit der beschriebenen Schuhsohle ausgestattet ist, können sich somit Relativbewegungen zwischen den beiden Einformungen in vertikaler Richtung ergeben (wenn die Schuhsohle auf dem Boden steht). Durch die Wahl der Geometrie der beiden Einformungen und insbesondere des geschlossenen Endbereichs einerseits sowie der Öffnung in der anderen Einformung andererseits kann gezielt die Federkonstante der Sohle in vertikaler Richtung sowie deren Dämpfungsverhalten beeinflusst werden.

Eine Weiterbildung des Verfahrens sieht vor, dass vor dem Schließen der Blasform und der Durchführung des obigen Schritts b) ein Einlegeteil in die Blasform eingelegt wird, so dass sich das Einlegeteil mit dem Sohlen-Hohlkörper während des Blasformvorgangs verbindet.

Das Einlegeteil kann dabei durch einen Spritzgießvorgang vorgefertigt werden. Das Einlegeteil ist nach einer bevorzugten Ausgestaltung mit einer U-förmigen Gestalt versehen. Diese wird insbesondere als Fersenspange im hinteren Bereich der Schuhsohle platziert. Das Einlegeteil besteht dabei bevorzugt aus thermoplastischem Polyurethan (TPU).

Möglich, wenngleich wegen des damit verbundenen höheren Fertigungsaufwands nicht bevorzugt, wäre es auch, dass durch den Blasformvorgang mehrere voneinander getrennte Hohlräume im Inneren des Sohlen-Hohlkörpers hergestellt werden, die dann mit jeweiligen Kunststoffkörpern gefüllt werden. Diese können gegebenenfalls dann auch unterschiedliche physikalische Eigenschaften haben, um die Feder- und Dämpfungseigenschaften der Schuhsohle gezielt beeinflussen zu können.

Die Kunststoffkörper weisen bevorzugt eine Härte zwischen 75 bis 90 Shore A auf, vorzugsweise zwischen 80 und 85 Shore A. Sie haben bevorzugt eine Schüttdichte zwischen 100 und 300 kg/m³.

Zu dem bevorzugt zum Einsatz kommenden expandierten thermoplastischen Polyurethan (E-TPU) für die Kunststoffkörper, die in den blasgeformten Sohlen-Hohlkörper eingebracht werden, sei folgendes erwähnt: Dieses Material ist an sich bekannt und wird in Schuhen eingesetzt. Es ist beispielsweise unter der Bezeichnung "PearlFoam" von der Huntsman International LLC oder unter der Bezeichnung "Infinergy" von der BASF SE erhältlich. Zu diesem Material wird ausdrücklich auf die WO 2005/066250 A1 Bezug genommen, wo sich Details zu diesem Material, also zu expandierbaren thermoplastischen Polyurethanen und deren Herstellung finden.

Zum Vorbekanntsein von thermoplastischem Elastomer auf Urethanbasis sei weiterhin ausdrücklich auf die WO 2010/010010 A1 hingewiesen, in der ein expandierbarer, treibmittelhaltiger thermoplastischer Polymer-Blend offenbart wird, der thermoplastisches Polyurethan und Styrolpolymerisat enthält. Der Polymer-Blend kann dabei mindestens ein weiteres thermoplastisches Polymer enthalten. Als weiteres thermoplastisches Polymer kommt insbesondere Polyamid (PA), Polymethylmethacrylat (PMMA), Polycarbonat (PC), Polyethylen (PE), Polypropylen (PP), Polyvinylchlorid (PVC), Cellulose bzw. Polyoxymethylen (POM) in Frage.

Gemäß der Erfindung werden also in einem blasgeformten Sohlen-Hohlkörper insbesondere expandierte Kunststoffschaum-Kugeln oder -Ellipsoide (eventuell auch zylindrisch geformte Körper) unter Verwendung insbesondere von E-TPU, E-TPE oder EPP (um beispielsweise sehr leichte Sohlen zu fertigen) eingesetzt, die in den geschaffenen Hohlraum im Sohlen-Hohlkörper gefüllt werden (besagter Sohlen-Hohlkörper kann auch als vorgefertigter "Käfig" für die Kugeln bzw. Ellipsoide bezeichnet werden).

Die angesprochene Stützstruktur erlaubt, dass die Sohle bei bestimmungsgemäßer Benutzung unter Belastung den Fuß optimal stützt. Dies ist unter dem Aspekt wesentlich, da ansonsten die sich im Inneren des Sohlen-Hohlraum befindlichen Kunststoffkörper infolge dessen, dass sie nicht miteinander verbunden sondern lose angeordnet sind, möglicherweise eine unzureichende Stützfunktion für den Fuß bieten würden.

Die Kugeln, Ellipsoide bzw. Zylinder, vorzugsweise aus E-TPU, beeinflussen wesentlich die Dämpfung des Schuhs, so dass das Sohlenteil mit dem befüllten Hohlraum bevorzugt als Zwischensohle zum Einsatz kommt.

Die Sohle kann mittels Vernähen oder Verkleben mit dem Schuhoberteil (Schuhschaft) verbunden werden, was als solches bekannt ist.

Vorstehend ist die Produktion der Sohle als komplettes Formteil beschrieben. Die Erfindung kann natürlich genauso auch zum Einsatz kommen, wenn lediglich ein Teil der Sohle wie beschrieben hergestellt und gegebenenfalls mit einem weiteren Sohlenteil verbunden wird.

Wenngleich das Extrudieren eines Kunststoffschlauchs und dessen unmittelbares Zuführen im noch warmen Zustand in die Blasform bevorzugt ist, kommt alternativ - wie oben angegeben - auch ein Spritzgießen eines Kunststoffrohlings infrage, der dann der Blasform zugeführt wird. In diesem Falle wird typischerweise zunächst der Spritzgießprozess für den Kunststoffrohling durchgeführt; wenn der Kunststoffrohling zur Blasformmaschine verbracht ist und in dieser blasgeformt werden soll, wird er dann wieder vorher erwärmt, um zum Sohlen-Hohlkörper verformt werden zu können.

In der Zeichnung ist ein Ausführungsbeispiel der Erfindung dargestellt. Es zeigen:
- Fig. 1: schematisch einen ersten Prozessschritt der erfindungsgemäßen Herstellung einer Schuhsohle,
- Fig. 2: die Draufsicht auf die Schuhsohle nach der Durchführung des Prozessschrittes gemäß Figur 1, wobei der Sohlen-Hohlkörper der Schuhsohle noch nicht befüllt ist,
- Fig. 3: schematisch den nachfolgenden Prozessschritt, gemäß dem der Sohlen-Hohlkörper der Schuhsohle mit Kunststoffkörpern befüllt wird, und
- Fig. 4: den Schnitt A-B gemäß Figur 2.

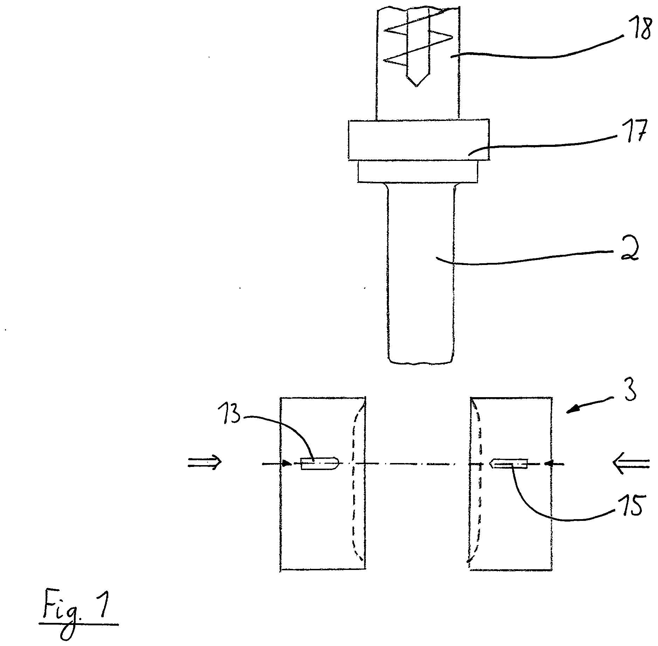

In Figur 1 ist schematisch der Beginn des Herstellungsprozesses einer Schuhsohle dargestellt. Ein Extruder 18 plastifiziert Kunststoffmaterial und bringt es über einen Extrusionskopf 17 aus, so dass ein über den gesamten Umfang geschlossener Kunststoffschlauch 2 produziert wird. Ist dieser lang genug, wird er in eine Blasform 3 eingebracht, die aus zwei Werkzeughälften besteht, die in Richtung der Doppelpfeile aufeinander zu bewegt werden und dann in bekannter Weise den Kunststoffschlauch 2 zwecks Blasformen einschließen.

Wie bereits erwähnt, kann alternativ auch ein Spritzgießen eines Kunststoffrohlings ins Auge gefasst werden, der dann in der Blasform 3 umgeformt wird.

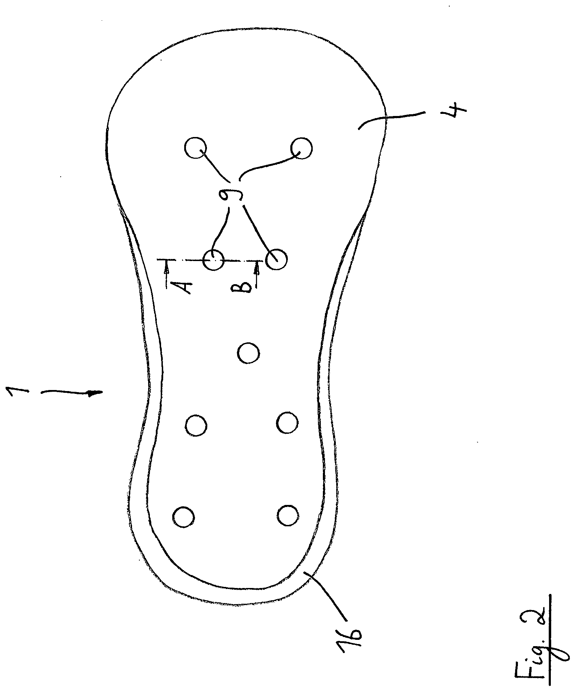

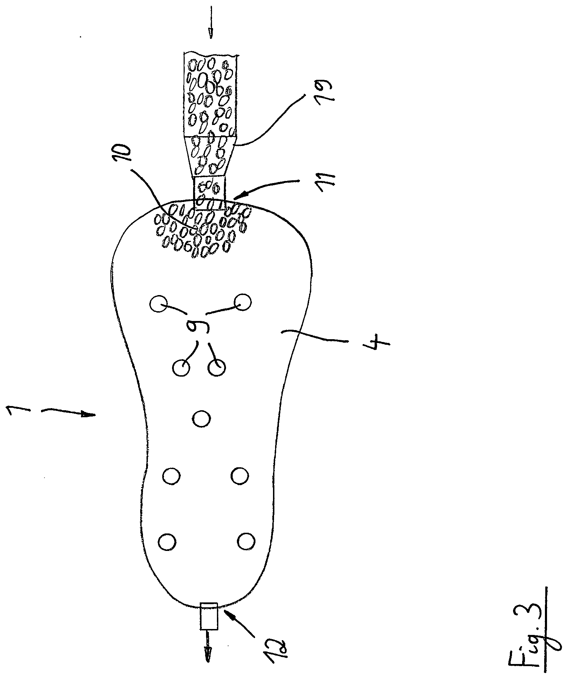

Durch den Blasformvorgang wird ein Sohlen-Hohlkörper 4 (s. Figuren 2 und 3) hergestellt, der in seinem Inneren einen Aufnahmeraum bereitstellt.

Schematisch angedeutet sind ein erstes Deformationswerkzeug 13 und ein zweites Deformationswerkzeug 15. Diese Werkzeuge 13, 15 fahren in Pfeilrichtung aufeinander zu, wenn die Werkzeughälften der Blasform 3 geschlossen sind. Durch die Werkzeuge 13, 15 werden Stützstrukturen 9 (siehe die Figuren 2 bis 4) in den Sohlen-Hohlkörper 4 eingebracht.

Von den Werkzeugen 13, 15 ist eine Anzahl vorhanden, wenngleich in Figur 1 nur ein einziges Paar der Werkzeuge 13, 15 dargestellt ist.

Wie sich aus Figur 2 ergibt, wurden vorliegend eine Anzahl der erwähnten Stützstrukturen 9, die nachfolgend noch näher beschrieben werden, hergestellt. Sie haben den Zweck, über die Aufstandsfläche des Fußes auf der Oberfläche der Schuhsohle 1 an gewünschten Stellen eine Stützfunktion zu bieten, so dass bei Aufgabe des Körpergewichts des Trägers des Schuhs die Schuhsohle 1 nicht in unkontrollierter Weise seitlich ausweicht.

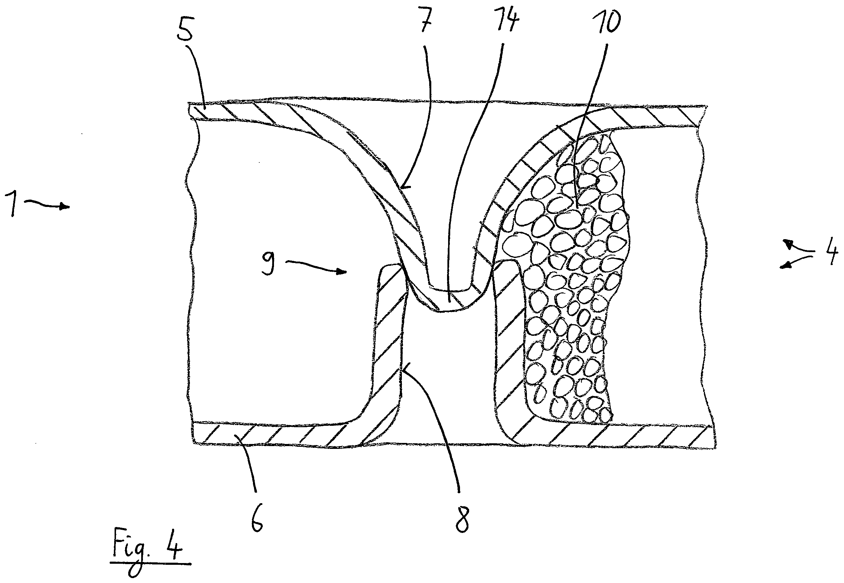

Details zur Stützstruktur 9 ergeben sich aus Figur 4. Hier ist zu erkennen, dass der Sohlen-Hohlkörper 4 eine obere Wandung 5 und eine untere Wandung 6 aufweist, die sich nach Durchführung des Blasformvorgangs beabstandet gegenüber liegen und zwischen sich den erwähnten Hohlraum einschließen. Durch die Deformationswerkzeuge 13 und 15 werden an den Stellen, die sich aus Figur 2 ergeben, Einformungen 7 und 8 eingebracht, nämlich durch das erste Deformationswerkzeug 13 die Einformung 7 und durch das zweite Deformationswerkzeug 15 die Einformung 8.

Wie zu erkennen ist, weist die Einformung 7 einen geschlossenen Endbereich 14 auf, während die Einformung 8 durch das axial endseitig nadelförmig ausgebildete zweite Deformationswerkzeug 15 eine Öffnung aufweist. Diese Öffnung ist so dimensioniert, dass die Einformung 7 mit ihrem geschlossenen Endbereich 14 zumindest teilweise in diese eintreten kann.

Die so hergestellte Stützstruktur 9 verhindert bzw. erschwert eine relative Verschiebung zwischen der oberen Wandung 5 und der unteren Wandung 6 in horizontale Richtung (bei bestimmungsgemäßer Verwendung des Schuhs, der die in Rede stehende Schuhsohle 1 aufweist).

Ist der beschriebene Sohlen-Hohlkörper 4 insoweit fertig gestellt, wird der Hohlraum, den er einschließt, mit Kunststoffkörper 10 gefüllt. Dies ist in Figur 3 illustriert. Hierzu wird eine Einfülldüse 19 in eine Öffnung 11 im Sohlen-Hohlkörper 4 eingeschoben. Über die Einfülldüse 19 werden dann, gegebenenfalls unterstützt durch Druckluft, kugelförmige oder ellipsoide Kunststoffkörper 10 aus expandiertem thermoplastischen Polyurethan (E-TPU) in den Sohlen-Hohlkörper 4 gefüllt, bis dieser vollständig mit Kunststoffkörper 10 gefüllt ist. Zu dem Material der Kunststoffkörper 10 sind oben bereits Hinweise auf entsprechende Publikationen angegeben.

Wesentlich ist, dass die Kunststoffkörper 10 in den Hohlraum des Sohlen-Hohlkörpers 4 quasi als Schüttgut eingefüllt und im Hohlraum unverbunden miteinander platziert sind. Demgemäß sind die Kunststoffkörper 10 frei von einer Verbindung untereinander. Die Kunststoffkörper 10 stützen sich nach ihrer Befüllung des Sohlen-Hohlkörper 4 zwar gegeneinander ab, sind aber lose zueinander angeordnet.

Hierdurch kann nicht nur das Dämpfungsverhalten der Sohle und damit des Schuhs sehr vorteilhaft beeinflusst werden; gleichzeitig ist auch der Herstellungsprozess einfach und kostengünstig durchführbar.

Durch das Absaugen von Luft, d. h. Anlegen eines Vakuums, an einer zweiten Öffnung 12 des Sohlen-Hohlkörper kann der Füllvorgang unterstützt und gegebenenfalls nach Abschluss desselben Luft aus dem Inneren des Sohlen-Hohlkörpers 4 evakuiert werden (siehe Pfeil bei der Öffnung 12).

Die Öffnungen 11 bzw. 12 können nach Abschluss des Füllprozesses mit Kunststoffkörpern 10 verschlossen werden. Hierbei ist insbesondere an ein Verschweißen der Öffnungen gedacht. So entsteht ein hermetisch abgeschlossener Hohlraum in der Schuhsohle 1, der mit den losen Kunststoffkörpern 10 gefüllt ist.

Im Zusammenwirken mit der Stützstruktur 9 ergibt sich die Möglichkeit, die Feder- und Dämpfungseigenschaften der Schuhsohle in gewissen Grenzen beliebig zu beeinflussen und dennoch dafür zu sorgen, dass bei der bestimmungsgemäßen Benutzung des Schuhs, der mit der Schuhsohle versehen ist, ein guter Halt für den Fuß bei guter Stabilität der Sohle gegeben ist.

In Figur 2 ist noch eine bevorzugte Weiterbildung des beschriebenen Verfahrens illustriert: Hier ist ein U-förmiges Einlegeteil 16 zu sehen, das vor dem Schließen der Blasform 3 in die Kavität derselben eingelegt wird. Durch den Blasformvorgang wird das Einlegeteil 16 fest mit dem Kunststoffschlauch 2 bzw. dem Sohlen-Hohlkörper 4 verbunden (verschweißt).

Das Einlegeteil 16 kann genutzt werden, um gezielt die Stützfunktion der Schuhsohle 1 zu beeinflussen. Bevorzugt wird das Einlegeteil 16 als Fersenschale benutzt, die im hinteren Bereich und namentlich im Bereich der Ferse den Fuß des Benutzers des mit der Schuhsohle ausgestatteten Schuhs stützt.

### Bezugszeichenliste:

- 1: Schuhsohle
- 2: Kunststoffschlauch
- 3: Blasform
- 4: Sohlen-Hohlkörper
- 5: Wandung
- 6: Wandung
- 7: Einformung
- 8: Einformung
- 9: Stützstruktur
- 10: Kunststoffkörper
- 11: erste Öffnung
- 12: zweite Öffnung
- 13: erstes Deformationswerkzeug
- 14: geschlossener Endbereich
- 15: zweites Deformationswerkzeug
- 16: Einlegeteil
- 17: Extrusionskopf
- 18: Extruder
- 19: Einfülldüse

## Patentansprüche

1. Verfahren zur Herstellung einer Schuhsohle (1), umfassend die Schritte:
a) Extrudieren eines Kunststoffschlauchs (2) und Zuführen des Kunststoffschlauchs (2) in eine Blasform (3) oder Spritzgießen eines Kunststoffrohlings und Zuführen des Kunststoffrohlings in eine Blasform (3);
b) Blasformen des Kunststoffschlauchs (2) oder des Kunststoffrohlings zu einem Sohlen-Hohlkörper (4), wobei während des Blasformprozesses an sich gegenüberliegenden Wandungen (5, 6) des Sohlen-Hohlkörpers (4) Einformungen (7, 8) eingebracht werden, so dass Teile der Wandungen (7, 8) in Kontakt miteinander gebracht werden und zwischen den sich gegenüberliegenden Wandungen (7, 8) eine Stützstruktur (9) bilden;
c) Entformen des blasgeformten Sohlen-Hohlkörpers (4) aus der Blasform (3);
d) Zumindest teilweises, vorzugsweise vollständiges, Füllen des blasgeformten Sohlen-Hohlkörpers (4) mit Kunststoffkörpern (10), wobei die Kunststoffkörper (10) durch eine erste Öffnung (11) im Sohlen-Hohlkörper (4) eingefüllt werden.

2. Verfahren nach Anspruch 1, **dadurch gekennzeichnet, dass** als Kunststoffkörper (10) Kugeln, Ellipsoide oder Zylinder verwendet werden.

3. Verfahren nach Anspruch 2, **dadurch gekennzeichnet, dass** die Abmessungen der einzelnen Kunststoffkörper (10) in den drei Raumrichtungen zwischen 1 mm und 13 mm betragen, vorzugsweise zwischen 3 mm und 6 mm.

4. Verfahren nach einem der Ansprüche 1 bis 3, **dadurch gekennzeichnet, dass** die Kunststoffkörper (10) aus geschäumtem Kunststoffmaterial bestehen.

5. Verfahren nach einem der Ansprüche 1 bis 4, **dadurch gekennzeichnet, dass** die Kunststoffkörper (10) aus expandiertem thermoplastischen Polyurethan (E-TPU), aus expandiertem thermoplastischen Elastomer (E-TPE), insbesondere aus expandiertem thermoplastischen Elastomer auf Olefinbasis (E-TPO), und/oder aus expandiertem Polypropylen (EPP) bestehen.

6. Verfahren nach einem der Ansprüche 1 bis 5, **dadurch gekennzeichnet, dass** der Sohlen-Hohlkörper (4) aus thermoplastischem Polyurethan (TPU), aus thermoplastischem Elastomer (TPE), aus Polyamid (PA) und/oder aus Gummimaterial besteht.

7. Verfahren nach einem der Ansprüche 1 bis 6, **dadurch gekennzeichnet, dass** nach Schritt d) gemäß Anspruch 1 ein Verschließen, insbesondere ein Verschweißen, der ersten Öffnung (11) erfolgt.

8. Verfahren nach einem der Ansprüche 1 bis 7, **dadurch gekennzeichnet, dass** während oder nach Schritt d) gemäß Anspruch 1 ein Absaugen von Luft aus dem Sohlen-Hohlkörper (4) erfolgt, insbesondere über eine zweite Öffnung (12), die von der ersten Öffnung (11) beabstandet ist.

9. Verfahren nach einem der Ansprüche 1 bis 8, **dadurch gekennzeichnet, dass** die Kunststoffkörper (10) ohne Verbindung zueinander im Sohlen-Hohlkörper (4) platziert werden.

10. Verfahren nach einem der Ansprüche 1 bis 9, **dadurch gekennzeichnet, dass** die Kunststoffkörper (10) in voller Packung und vorzugsweise unter Druck im Sohlen-Hohlkörper (4) platziert werden.

11. Verfahren nach einem der Ansprüche 1 bis 10, **dadurch gekennzeichnet, dass** die Herstellung der Stützstruktur (9) erfolgt, indem in die eine Wandung (5) mittels eines ersten Deformationswerkzeugs (13) die eine Einformung (7) mit geschlossenem Endbereich (14) erzeugt wird und in die andere Wandung (6) mittels eines zweiten Deformationswerkzeugs (15) die andere Einformung (8) mit offenem Endbereich erzeugt wird, wobei der geschlossene Endbereich (14) der einen Einformung (7) zum Eintritt in das offene Ende der anderen Einformung (8) ausgebildet ist.

12. Verfahren nach einem der Ansprüche 1 bis 11, **dadurch gekennzeichnet, dass** vor dem Schließen der Blasform (3) und Durchführung des Schritts b) gemäß Anspruch 1 ein Einlegeteil (16) in die Blasform (3) eingelegt wird, so dass sich das Einlegeteil (16) mit dem Sohlen-Hohlkörper (4) während des Blasformvorgangs verbindet.

13. Verfahren nach Anspruch 12, **dadurch gekennzeichnet, dass** das Einlegeteil (16) durch einen Spritzgießvorgang vorgefertigt wird.

14. Verfahren nach Anspruch 12 oder 13, **dadurch gekennzeichnet, dass** das Einlegeteil (16) eine U-förmige Gestalt aufweist.

15. Verfahren nach einem der Ansprüche 12 bis 14, **dadurch gekennzeichnet, dass** das Einlegeteil (16) aus thermoplastischem Polyurethan (TPU) besteht.

## Claims

1. Method for producing a shoe sole (1), comprising the steps:
a) Extruding a plastic hose (2) and feeding the plastic hose (2) into a blow mould (3) or injection moulding of a plastic blank and feeding the plastic blank into a blow mould (3);
b) Blow moulding the plastic hose (2) or the plastic blank into a sole hollow body (4), wherein recesses (7, 8) are introduced on mutually opposing walls (5, 6) of the sole hollow body (4) during the blow moulding process, such that parts of the walls (5, 6) are brought into contact with one another and form a supporting structure (9) between the mutually opposing walls (5, 6);
c) Removing the blow-moulded sole hollow body (4) from the blow mould (3);
d) at least partially, preferably completely, filling the blow-moulded sole hollow body (4) with plastic bodies (10), wherein the plastic bodies (10) are added through a first opening (11) in the sole hollow body (4).

2. Method according to claim 1, **characterized in that** as plastic bodies (10) spheres, ellipsoids or cylinders are used.

3. Method according to claim 2, **characterized in that** the dimensions of the single plastic bodies (10) in the three special directions are between 1 mm and 13 mm, preferably between 3 mm and 6 mm.

4. Method according to one of claims 1 to 3, **characterized in that** the plastic bodies (10) consist of foamed plastic material.

5. Method according to one of claims 1 to 4, **characterized in that** the plastic bodies (10) consist of expanded thermoplastic polyurethane (E-TPU), of expanded thermoplastic elastomere (E-TPE), especially of expanded thermoplastic elastomere based on olefin (E-TPO), and/or of expanded polypropylene (EPP).

6. Method according to one of claims 1 to 5, **characterized in that** the sole hollow body (4) consists of thermoplastic polyurethane (TPU), of thermoplastic elastomere (TPE), of polyamide (PA) and/or of rubber material.

7. Method according to one of claims 1 to 6, **characterized in that** after step d) according to claim 1 a sealing, especially a welding, of the first opening (11) occurs.

8. Method according to one of claims 1 to 7, **characterized in that** during or after step d) according to claim 1 an evacuation of air from the sole hollow body (4) occurs, especially via a second opening (12) which is disposed at a distance from the first opening (11).

9. Method according to one of claims 1 to 8, **characterized in that** the plastic bodies (10) are arranged in the sole hollow body (4) without connection to another.

10. Method according to one of claims 1 to 9, **characterized in that** the plastic bodies (10) are arranged in full package and preferably under pressure in the sole hollow body (4).

11. Method according to one of claims 1 to 10, **characterized in that** the production of the supporting structure (9) takes place by creating one of the recesses (7) with the closed end region (14) into one of the walls (5) by means of a first deformation tool (13) and by creating the other recess (8) with the open end region into the other wall (6) by means of a second deformation tool (15), wherein the closed end region (14) of one of the recesses (7) is designed for entry into the open end of the other recess (8).

12. Method according to one of claims 1 to 11, **characterized in that** prior to closing of the blow mould (3) and carrying out of step b) according to claim 1 an insert (16) is placed into the blow mould (3) so that the insert (16) connects with the sole hollow body (4) during the blow moulding process.

13. Method according to claim 12, **characterized in that** the insert (16) is prefabricated by an injection moulding process.

14. Method according to claim 12 or 13, **characterized in that** the insert (16) has a U-shaped design.

15. Method according to one of claims 12 to 14, **characterized in that** the insert (16) consists of thermoplastic polyurethane (TPU).

## Revendications

1. Procédé de fabrication d'une semelle de chaussure (1), comprenant les étapes suivantes :
a) l'extrusion d'une gaine en matière plastique (2) et l'introduction de la gaine en matière plastique (2) dans un moule de soufflage (3) ou le moulage par injection d'une ébauche en matière plastique et l'introduction de l'ébauche en matière plastique dans un moule de soufflage (3) ;
b) le moulage par soufflage de la gaine en matière plastique (2) ou de l'ébauche en matière plastique en un corps creux de semelle (4), des concavités (7, 8) étant réalisées sur des parois opposées (5, 6) du corps creux de semelle (4) pendant le processus de moulage par soufflage, de telle sorte que des parties des parois (7, 8) soient mises en contact les unes avec les autres et forment une structure support (9) entre les parois opposées (7, 8) ;
c) le démoulage du corps creux de semelle moulé par soufflage (4) du moule de soufflage (3) ;
d) le remplissage au moins partiel, de préférence total, du corps creux de semelle moulé par soufflage (4) avec des corps en matière plastique (10), les corps en matière plastique (10) étant introduits dans le corps creux de semelle (4) par une première ouverture (11) .

2. Procédé selon la revendication 1, **caractérisé en ce que** des billes, des ellipsoïdes ou des cylindres sont utilisés en tant que corps en matière plastique (10) .

3. Procédé selon la revendication 2, **caractérisé en ce que** les dimensions des corps en matière plastique individuels (10) dans les trois dimensions de l'espace sont comprises entre 1 mm et 13 mm, de préférence entre 3 mm et 6 mm.

4. Procédé selon l'une quelconque des revendications 1 à 3, **caractérisé en ce que** les corps en matière plastique (10) sont constitués par une matière plastique moussée.

5. Procédé selon l'une quelconque des revendications 1 à 4, **caractérisé en ce que** les corps en matière plastique (10) sont constitués par du polyuréthane thermoplastique expansé (E-TPU), par de l'élastomère thermoplastique expansé (E-TPE), notamment par de l'élastomère thermoplastique expansé à base d'oléfine (E-TPO), et/ou par du polypropylène expansé (EPP).

6. Procédé selon l'une quelconque des revendications 1 à 5, **caractérisé en ce que** le corps creux de semelle (4) est constitué par du polyuréthane thermoplastique (TPU), par de l'élastomère thermoplastique (TPE), par du polyamide (PA) et/ou par du matériau caoutchouteux.

7. Procédé selon l'une quelconque des revendications 1 à 6, **caractérisé en ce qu'**une fermeture, notamment un soudage, de la première ouverture (11) a lieu après l'étape d) selon la revendication 1.

8. Procédé selon l'une quelconque des revendications 1 à 7, **caractérisé en ce qu'**une aspiration d'air à partir du corps creux de semelle (4) a lieu pendant ou après l'étape d) selon l'étape 1, notamment par l'intermédiaire d'une deuxième ouverture (12), qui est espacée de la première ouverture (11).

9. Procédé selon l'une quelconque des revendications 1 à 8, **caractérisé en ce que** les corps en matière plastique (10) sont placés sans liaison les uns avec les autres dans le corps creux de semelle (4).

10. Procédé selon l'une quelconque des revendications 1 à 9, **caractérisé en ce que** les corps en matière plastique (10) sont placés en garnissage comble et de préférence sous pression dans le corps creux de semelle (4) .

11. Procédé selon l'une quelconque des revendications 1 à 10, **caractérisé en ce que** la fabrication de la structure support (9) a lieu en créant dans une paroi (5) au moyen d'un premier outil de déformation (13) une concavité (7) ayant une zone d'extrémité fermée (14) et en créant dans l'autre paroi (6) au moyen d'un deuxième outil de déformation (15) l'autre concavité (8) ayant une zone d'extrémité ouverte, la zone d'extrémité fermée (14) d'une concavité (7) étant configurée pour entrer dans l'extrémité ouverte de l'autre concavité (8) .

12. Procédé selon l'une quelconque des revendications 1 à 11, **caractérisé en ce qu'**une partie d'insert (16) est insérée dans le moule de soufflage (3) avant la fermeture du moule de soufflage (3) et la réalisation de l'étape b) selon la revendication 1, de telle sorte que la partie d'insert (16) se relie avec le corps creux de semelle (4) pendant le processus de moulage par soufflage.

13. Procédé selon la revendication 12, **caractérisé en ce que** la partie d'insert (16) est préfabriquée par un processus de moulage par injection.

14. Procédé selon la revendication 12 ou 13, **caractérisé en ce que** la partie d'insert (16) présente une configuration en forme de U.

15. Procédé selon l'une quelconque des revendications 12 à 14, **caractérisé en ce que** la partie d'insert (16) est constituée par du polyuréthane thermoplastique (TPU).
